# FASCICULE DE BREVET EUROPEEN

(11) **EP 0 734 628 B1**
(45) Date de publication et mention de la délivrance du brevet: **03.03.1999**
(21) Numéro de dépôt: 95903395.2
(22) Date de dépôt: 12.12.1994
(51) Int. Cl.: H04N 7/087, H04N 5/445

(54) **SYSTEME DE GESTION DE PROGRAMMES DE TELEVISION**
VERWALTUNGSSYSTEM FÜR FERNSEHPROGRAMME
TELEVISION PROGRAMS MANAGEMENT SYSTEM

(30) Priorité: 15.12.1993 FR 9315515
(43) Date de publication de la demande: 02.10.1996
(73) Titulaire: Henley Trading Limited, Dublin 2 (IE)
(72) Inventeur: GORETA, Lucas, F-69006 Lyon (FR)
(74) Mandataire: Bratel, Gérard
(86) Numéro de dépôt international: FR9401452
(87) Numéro de publication internationale: WO9517074

(56) Documents cités:
- EP-A- 0 059 666
- EP-A- 0 460 520
- EP-A- 0 488 379
- EP-A- 0 503 070
- EP-A- 0 572 090
- WO-A-91/00670
- WO-A-93/20654
- US-A- 4 706 121
- US-A- 4 792 849
- US-A- 4 995 077
- US-A- 5 186 471
- US-A- 5 236 199

## Description

La présente invention concerne un système de gestion de programmes de télévision.

Il existe déjà divers systèmes permettant au téléspectateur d'être informé des programmes des différentes chaînes de télévision qu'il peut recevoir, et éventuellement de choisir avec facilité les canaux à enregistrer. Toutefois, les systèmes existants se limitent le plus souvent à l'affichage, sur l'écran du récepteur de télévision, de données telles que le numéro du canal sur lequel le récepteur est accordé, ou autres informations ou messages, selon le principe de l'incrustation. D'une façon générale, ces systèmes ne permettent pas une commande automatisée du choix des programmes, et une sélection (ou signalisation de commencement) du programme choisi de façon automatique, à partir de données téléchargées. En d'autres termes, les systèmes actuels permettent de capter et d'afficher des informations, mais ils sont incapables de déclencher automatiquement, à partir de ces informations, une quelconque action désirée par le téléspectateur (voir par exemple les documents WO-9100670 et EP-A-0572090).

On connaît, par ailleurs, des systèmes programmateurs pour téléviseurs, qui permettent de choisir à l'avance un numéro de canal en relation avec des temps de début et fin de programmes, mais ces systèmes programmateurs n'exploitent que les données introduites manuellement par le téléspectateur, et ne peuvent tenir compte d'autres données préexistantes ou extérieures, telles que la nature d'une émission ou sa simultanéité avec une autre émission intéressant le même téléspectateur (recouvrement d'émissions).

D'autres systèmes connus faisant appel au "télétexte" sont uniquement conçus pour la mise en marche automatique, à l'instant approprié, de l'enregistrement d'une émission par un magnétoscope - voir par exemple les documents EP-A-0503070 et EP-A-0460520. En particulier, ces systèmes n'exercent aucune action sur le téléviseur lui-même, de sorte que leurs possibilités restent limitées.

On connaît encore, par le document US-A-4706121, un système pour la transmission de données relative aux programmes de télévision, et pour la sélection de programmes à partir de telles données, ces dernières étant stockées dans une mémoire et traitées par un processeur. Dans ce système, l'émission et la réception des données relatives aux programmes sont effectuées par une voie séparée de celle utilisée pour la transmission des programmes eux-mêmes, par exemple par une voie "FM", ce qui conduit à une complication. En particulier, ce système ne fait pas appel aux possibilités intéressantes offertes par le "télétexte". De plus, dans le système du document US-A-4706121, il est nécessaire que le récepteur "FM" ou autre soit programmé pour recevoir à heures fixes les données de programmes, ce qui est peu compatible avec la multiplicité et la diversité d'origine des émissions actuelles.

La présente invention vise à éviter les inconvénients ou insuffisances des systèmes actuels, en fournissant un système global de gestion des programmes de télévision, sous la forme d'un système modulaire et économique, assurant la réception et la visualisation des programmes pouvant être reçus en un lieu donné, le tri de ces programmes notamment en fonction des types d'émissions, la commande automatique de diverses actions sur le téléviseur en tenant compte de données complémentaires introduites par le téléspectateur (programmation du téléviseur), et aussi éventuellement la gestion d'un magnétoscope associé au téléviseur concerné.

A cet effet, l'invention a pour objet un système de gestion de programmes de télévision, comprenant essentiellement, en combinaison : des moyens émetteurs de données relatives aux programmes suivant un format préétabli du type "télétexte", des moyens de réception, décodage, stockage et affichage des données, également du type "télétexte", intégrés à un téléviseur ou associés à celui-ci, la transmission des données relatives aux programmes, entre les moyens émetteurs et les moyens récepteurs, étant assurée par la voie de transmission des images, une unité de traitement programmable pour ces données et de commande d'actions relatives au téléviseur et/ou à un appareil associé, tel que magnétoscope, à partir de ces données, et des moyens de dialogue permettant les sélections et actions, les données relatives aux programmes étant chargées dans une mémoire spécifique, dite mémoire de programmes, adjointe aux moyens de réception, décodage et affichage de ces données, et l'unité de traitement programmable étant principalement constituée d'un processeur de traitement spécifique, qui est en liaison avec la mémoire de programmes et qui comprend lui-même une mémoire effaçable permettant le téléchargement de données variables liées aux programmes des chaînes de télévision, par exemple de nouveaux codes d'identification d'émissions, ainsi que l'enregistrement des choix effectués par le téléspectateur, cette unité de traitement étant reliée à un dispositif existant d'affichage "télétexte" dont elle utilise des fonctions, ou bien les fonctions du type "télétexte" étant incorporées au système objet de l'invention, et ladite unité de traitement étant en outre reliée aux moyens de commande existants du téléviseur pour le choix de la chaîne regardée, le système comprenant de plus un dispositif de commutation automatique des canaux de télévision, le processeur de traitement comportant une liaison avec le dispositif de commutation automatique des canaux de télévision, par laquelle transitent les ordres de commutation de canal, le processeur étant adapté de manière à permettre une commande automatique de changement de chaîne sur le téléviseur, en fonction de données mémorisées représentant des choix préalables du téléspectateur et des données reçues et traitées par le processeur de traitement.

Les moyens émetteurs et récepteurs des données, ainsi que d'affichage de ces données, étant ici notamment du type "télétexte" bien connu en soi, leur intégration dans le système objet de l'invention offre toutefois des possibilités d'application beaucoup plus étendues, tant du point de vue informatif que du point de vue de la commande automatique d'actions à partir des données reçues et traitées, actions telles que : le changement automatique de chaîne sur le téléviseur, la mise en route ou l'arrêt d'un magnétoscope, l'affichage sélectif de certaines données ou de certains messages, en fonction notamment d'un code d'identification incorporable dans l'unité de traitement, ou d'une programmation choisie directement par les moyens émetteurs ou par le téléspectateur ou encore de manière interactive entre les moyens émetteurs et l'utilisateur, en temps réel ou différé. Plus particulièrement, le système est rendu apte à commander de façon automatique, sur un ordre reçu des moyens émetteurs de données et/ou en fonction du choix préalable du téléspectateur, une action pouvant être l'émission d'une signalisation indiquant le début d'une émission choisie sur une chaîne autre que celle actuellement regardée, ou la commutation automatique du téléviseur sur la chaîne choisie.

Les données reçues, concernant notamment les programmes des différentes chaînes de télévision, sont chargées dans la mémoire spécifique (dite mémoire de programmes) adjointe aux moyens de réception, décodage et affichage de ces données, cette mémoire étant choisie de taille suffisante en fonction de la nature et de la quantité des données devant être ici reçues et stockées.

L'ensemble constitué par le téléviseur, y compris sa télécommande, et par le système objet de l'invention comprend par ailleurs des moyens de télécommande permettant l'affichage, sur l'écran de téléviseur, d'informations telles que l'ensemble des programmes (selon les données téléchargées) et/ou du choix de programmes effectué par le téléspectateur ; cet affichage d'informations s'effectue seul, ou en superposition à l'image de l'émission regardée.

Dans le cas d'utilisation d'une liaison téléphonique entre les moyens émetteurs de données, d'une part et les moyens de réception, décodage, stockage et affichage des données, d'autre part, le système comprend encore avantageusement, sur le lieu du téléviseur, des moyens de génération de signaux audio et d'envoi de ces signaux sur la même ligne téléphonique, ces derniers moyens étant en relation avec le processeur de traitement. L'ensemble est ainsi rendu interactif, et dans ce cas il utilise notamment des moyens de génération de signaux DTMF, permettant l'envoi de seize signes différents, soit à partir d'un clavier de téléphone ordinaire, soit à partir d'un clavier spécial intégré au module de télécommande du téléviseur. Le téléspectateur peut ainsi se connecter sur un serveur et dialoguer, répondre, réserver, etc... à l'aide de sa télécommande et des seize signes de base (ou signes plus nombreux obtenus par combinaison des signes de base) que celle-ci peut générer.

Selon une possibilité complémentaire, toujours liée à l'existence d'une liaison téléphonique, le système comprend encore des moyens de génération ou transmission de signaux audio à partir d'une carte à puce, notamment d'une carte DTMF à puce, pour permettre des jeux ou opérations prépayés ou facturables, avec identification du téléspectateur.

Les différents composants principaux et optionnels du système de gestion de programmes de télévision objet de l'invention peuvent être intégrés (en totalité ou en partie) dans le téléviseur, ou être logés dans un boîtier externe spécial. Ces composants peuvent être en partie communs avec un dispositif d'affichage d'informations existant de type "télétexte", ou inclure les éléments du type "télétexte" nécessaires à son fonctionnement.

Tout en étant simple et de faible coût, notamment en raison de son caractère modulaire, le système objet de la présente invention offre des possibilités riches et nombreuses :

En premier lieu, ce système assure la réception simple, de façon alphanumérique et graphique, des données relatives aux programmes, avec horaire et contenu des émissions, de toutes les chaînes de télévision reçues par le téléspectateur, à l'endroit où se situe le téléviseur, et la visualisation de ces programmes à la demande, sur l'écran du téléviseur lui-même et/ou sur un boîtier de télécommande spécifique, équipé d'un petit écran de visualisation. Si nécessaire, le système peut indiquer et traiter, en heure locale, les horaires d'émissions pour lesquelles l'heure de référence est différente (émissions étrangères, notamment transmises par satellite).

En outre, les données envoyées et reçues peuvent être organisées et triées, selon le genre d'émissions, les heures de début et fin des émissions, et d'autres informations plus particulières, propres à caractériser les émissions et à permettre leur sélection selon certains critères. A cet effet, l'émetteur diffuse des données relatives aux programmes d'une façon normalisée, ces données étant assorties de codes préétablis, de façon à permettre leur identification et leur traitement, les codes permettant diverses actions telles que la commande automatique du téléviseur, ainsi que des fonctions interactives. A titre d'exemple, peuvent être prévus dans un tel système :
- un code spécifique de reconnaissance, activant la mémorisation des données en les aiguillant vers la mémoire effaçable allouée à cet effet ;
- un code définissant le nom ou le numéro de la chaîne de télévision ;
- un code définissant la catégorie de l'émission, telle que film, retransmission sportive, reportage, etc... et, le cas échéant, la nature de l'émission (exemple : genre de film, genre de sport) ;
- un code de commande, pour la commande directe du téléviseur, en particulier : autorisation ou interdiction de visualisation d'une émission, mise en marche automatique du téléviseur et/ou du magnétoscope à l'heure exacte de début d'une émission définie, interruption de l'enregiscrement sur magnétoscope lors de la diffusion des publicités...

L'unité de traitement interroge régulièrement les moyens de réception des données en question, pour toutes les chaînes reçues par le téléviseur, et mémorise les informations qui lui sont destinées.

Grâce à ces données et aux codes associés, le système pourra notamment :
- effectuer un tri des programmes par types, et proposer au téléspectateur un choix d'émissions d'un type donné, élargi éventuellement aux émissions d'un type voisin ;
- gérer les chevauchements d'émissions, en avertissant le téléspectateur des recouvrements possibles et en lui proposant, le cas échéant, l'enregistrement d'un des programmes ;
- interdire le choix de certains genres d'émissions, par exemple les émissions ne devant pas être vues par les enfants, ou interdire l'utilisation du téléviseur à certaines heures de la journée ;
- effectuer des recherches d'émissions, à partir du type ou du nom de celles-ci (complet ou partiel) et de données complémentaires, par exemple interroger le système en demandant si, à un jour donné ou dans la semaine, est diffusé un film avec un acteur donné ;
- gérer un magnétoscope, à partir des fonctions du système, la programmation du magnétoscope se faisant en choisissant directement sur l'écran les émissions, à partir de l'affichage des programmes. Le système, connaissant l'heure et la durée de chaque émission, est capable de gérer la longueur de bande de la cassette d'enregistrement, ainsi que les éventuels chevauchements d'émissions. Il permet aussi de mémoriser le contenu de chaque cassette, en stockant les noms, dates, heures, durées et autres caractéristiques des émissions enregistrées, d'où la possibilité d'une gestion complète de la vidéothèque du téléspectateur. En outre, le système est tel qu'il permet, par exemple, d'enregistrer sélectivement et automatiquement toute émission d'une catégorie particulière (par exemple toutes les retransmissions de tennis), quelles que soient son heure et sa durée (même inconnues à l'avance), et quelle que soit la chaîne diffusant cette émission.

Par ailleurs, lorsqu'une liaison téléphonique est adjointe au système, celui-ci permet non seulement des opérations de transaction, jeux, prépaiement... mais encore de scruter un panel de téléspectateurs et d'apprécier l'audience.

De toute façon, l'invention sera mieux comprise à l'aide de la description qui suit, en référence au dessin schématique annexé représentant, à titre d'exemples, quelques modes de réalisation de ce système de gestion de programmes de télévision :
Figure 1 est un schéma de principe du système objet de la présente invention ;
Figure 2 est un schéma détaillé montrant notamment la structure de l'unité de traitement programmable ;
Figures 3, 4 et 5 sont des schémas similaires à figure 2, illustrant des variantes du système selon l'invention.

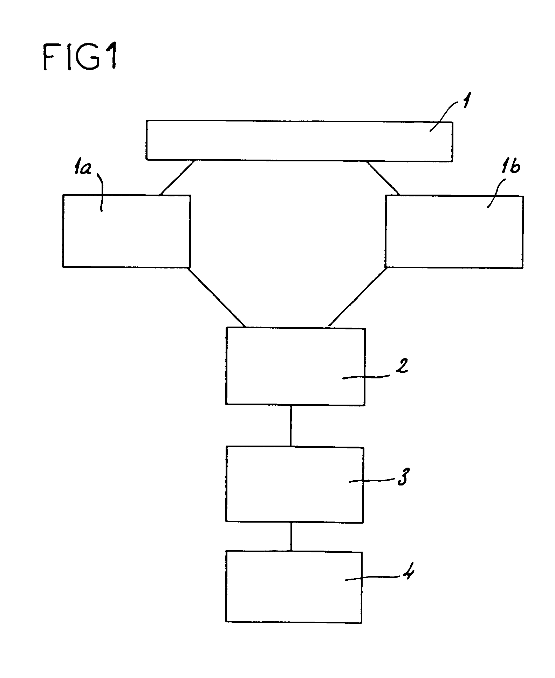

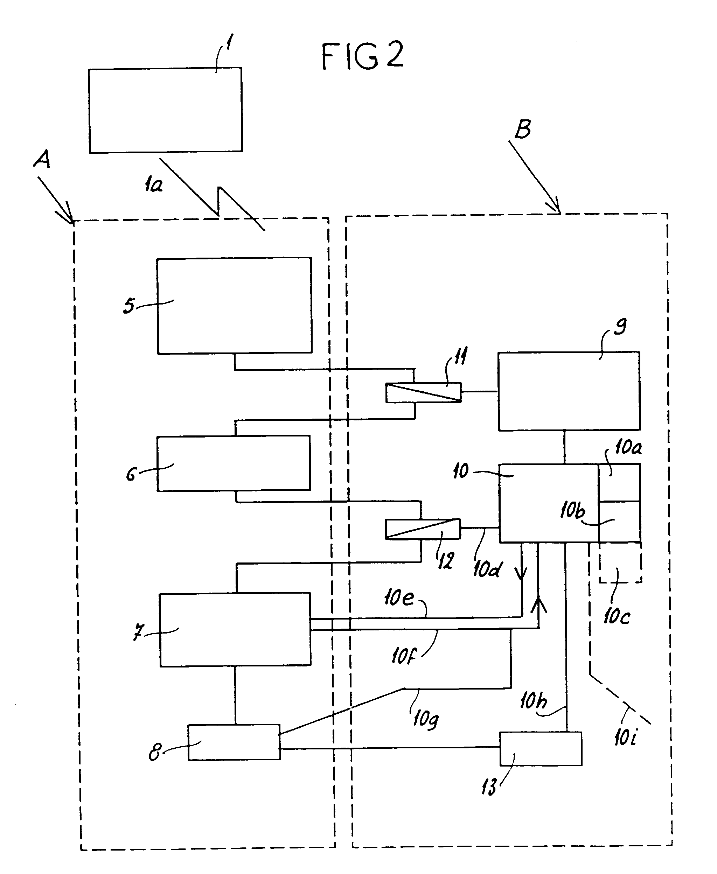

Comme le montre la figure 1, le système de gestion de programmes de télévision comprend des moyens émetteurs de données 1, soit intégrés à l'émetteur de télévision avec transmission de type "télétexte" par la voie de transmission des images 1a, donc par voie hertzienne ou réseau câblé, soit avec transmission par ligne téléphonique 1b, soit encore avec combinaison de ces deux possibilités. Du côté de l'utilisateur, donc du téléviseur, le système comprend des moyens de réception, de décodage, de stockage et d'affichage des données 2, basés sur la norme "télétexte", qui sont associés à une unité de traitement programmable 3, avec mémoire effaçable et interface de dialogue et de commande des divers éléments du téléviseur. Le repère 4 désigne les moyens de dialogue proprement dits, permettant les sélections et actions. Le système ainsi constitué permet d'émettre les informations relatives aux programmes des chaînes de télévision captées, de charger ces programmes dans une mémoire, et de commander des actions en tenant compte de ces informations, ceci notamment grâce à l'unité de traitement programmable 3, représentée plus en détail (dans un premier mode de réalisation) à la figure 2.

Sur cette figure, le repère 1 désigne de nouveau les moyens émetteurs de données, le cadre A indique les dispositifs existants notamment en liaison avec le système "télétexte", et le cadre B indique les moyens additionnels propres au système de la présente invention, correspondant notamment à des fonctions de l'unité de traitement programmable.

Les dispositifs existants A comprennent des moyens de réception et de décodage "télétexte" 5, une mémoire "télétexte" 6, des moyens de commande et d'affichage "télétexte" et fonctions associées 7, et des moyens de réception et traitement 8 pour les signaux infrarouge en provenance de la télécommande du téléviseur (et/ou du clavier éventuel situé sur le téléviseur).

Les moyens additionnels B comprennent une mémoire spécifique 9, effaçable, de stockage des programmes des différentes chaînes, ainsi que des codes associés, en liaison avec un processeur de traitement 10, de puissance de calcul adaptée. Un aiguillage électronique 11, agissant sur la réception d'un code spécifique assure sélectivement le chargement de la mémoire "télétexte" 6 ou de la mémoire de programmes 9 et du processeur 10, l'aiguillage 11 étant disposé entre les moyens de réception et de décodage "télétexte" 5, d'une part, et les deux mémoires 6 et 9 d'autre part.

Le processeur de traitement 10 comprend une mémoire reprogrammable, téléchargeable 10a, ainsi qu'une mémoire morte 10b contenant le programme de fonctionnement de ce processeur. Une mémoire de programmes optionnels 10c pour le magnétoscope peut encore lui être adjointe (fonction "vidéothèque").

Le processeur de traitement 10 comporte une liaison 10d de commande d'affichage de données spécifiques liées aux programmes, aboutissant à un organe de commutation 12 intercalé entre la mémoire "télétexte" 6 et les moyens de commande et d'affichage "télétexte" 7. Une autre liaison 10e, entre le processeur de traitement 10 et les moyens de commande et d'affichage 7 précités, assure la commande des fonctions "télétexte" par le processeur de traitement 10, selon divers modes possibles (affichage seul ou superposé à l'image, mode "signalisation", etc...). Une liaison inverse 10f sert à la réception, par le processeur de traitement 10, de signaux reçus par les moyens de commande "télétexte" 7, en particulier en provenance de la télécommande du téléviseur, pour le traitement et le lancement de certaines procédures. Une autre liaison 10g, associée à la précédente, assure la réception, par le processeur de traitement 10, de signaux en provenance directe de la télécommande ou du clavier du téléviseur, et spécifiques aux fonctions du processeur de traitement 10, par exemple : tri alphanumérique, fonctions "début" et "fin", etc...

Une liaison 10h, par laquelle transitent des ordres de commutation de canal, part encore du processeur de traitement 10 vers un dispositif de commutation automatique des canaux de télévision 13, lui-même relié aux moyens de réception et de traitement 8 des signaux de la télécommande et/ou du clavier du téléviseur.

Enfin, à titre optionnel, une liaison de commande 10i relie le processeur de traitement 10 à un magnétoscope (non représenté).

Ainsi, l'unité de traitement programmable du système objet de l'invention, reliée au dispositif d'affichage "télétexte" dont elle utilise les fonctions, permet :
- de reconnaître les données émises par les moyens émetteurs 1, grâce à un code spécifique de reconnaissance activant la mémorisation de ces données, notamment les programmes des différentes chaînes, dans la mémoire 9, et
- d'actionner de façon automatique, sur commande des moyens émetteurs 1 ou sur choix préalable du téléspectateur, soit un signal d'information indiquant le début du programme choisi sur une autre chaîne (et ce quelle que soit la chaîne regardée), soit la commutation automatique du téléviseur sur la chaîne choisie par le dispositif 13.

Outre la commande de telles actions, le système permet, par des moyens de commande simples, l'affichage sur l'écran du téléviseur d'informations telles que les programmes complets des différentes chaînes, ou des informations sélectionnées et triées, par exemple par type ou genre d'émissions.

Le processus de traitement 10 étant quant à lui programmable à volonté par téléchargement, toute nouvelle combinaison, possibilité de choix ou télécommande du téléviseur devient possible, sans avoir à modifier le système lui-même.

On notera que l'utilisation du système implique son initialisation. En effet, afin de connaître la totalité des programmes de télévision disponibles et d'être en mesure de les afficher et de les traiter, il est important d'initialiser le système en commandant un balayage de toutes les chaînes reçues, jusqu'à l'acquisition de toutes les données. Ce balayage peut se faire en utilisant la fonction de syntonisation du téléviseur, dans le cas d'un téléviseur ordinaire, ou dans le cas d'un téléviseur plus évolué une fonction analogue à celle connue sous le nom "image dans l'image", qui implique la possibilité de capter d'autres canaux de télévision pendant la vision d'un canal, le balayage étant alors fait de façon non apparente vis-à-vis de l'utilisateur.

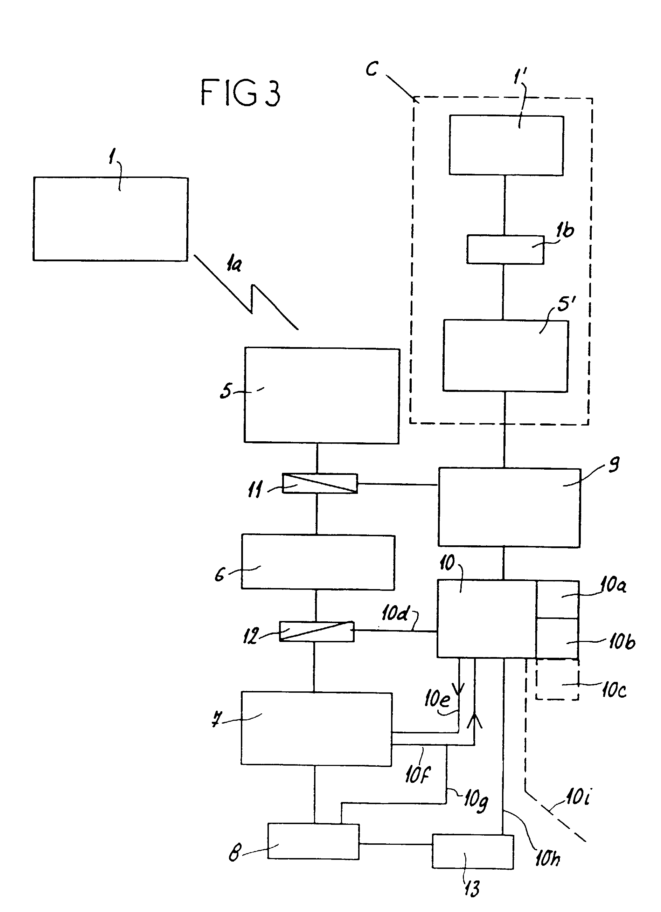

La figure 3, sur laquelle les composants précédemment décrits sont désignés par les mêmes repères, décrit un système comportant, de façon additionnelle, un dispositif de téléchargement d'informations du même type, ou d'autres données, par ligne téléphonique, dispositif indiqué dans son ensemble par le cadre C. Le dispositif C comprend, outre la ligne téléphonique 1b proprement dite, des moyens émetteurs de données 1', des moyens de numérotation téléphonique (non représentés séparément) pouvant être un simple combiné téléphonique avec clavier ou cadran, connecté en parallèle sur la ligne téléphonique 1b, et des moyens de réception et de mise en forme 5', aux normes "télétexte", des signaux reçus par la ligne téléphonique 1b. Les moyens de réception et de mise en forme 5' sont eux-mêmes reliés à la mémoire de stockage de programmes 9 précédemment décrite, et assurent ainsi le chargement de cette mémoire 9 avec les données transmises par la ligne téléphonique 1b. Le traitement de ces données, et la commande d'affichage ou d'actions particulières à partir de ces données, s'effectuent sans changements par rapport à la description faite ci-dessus en référence à la figure 2.

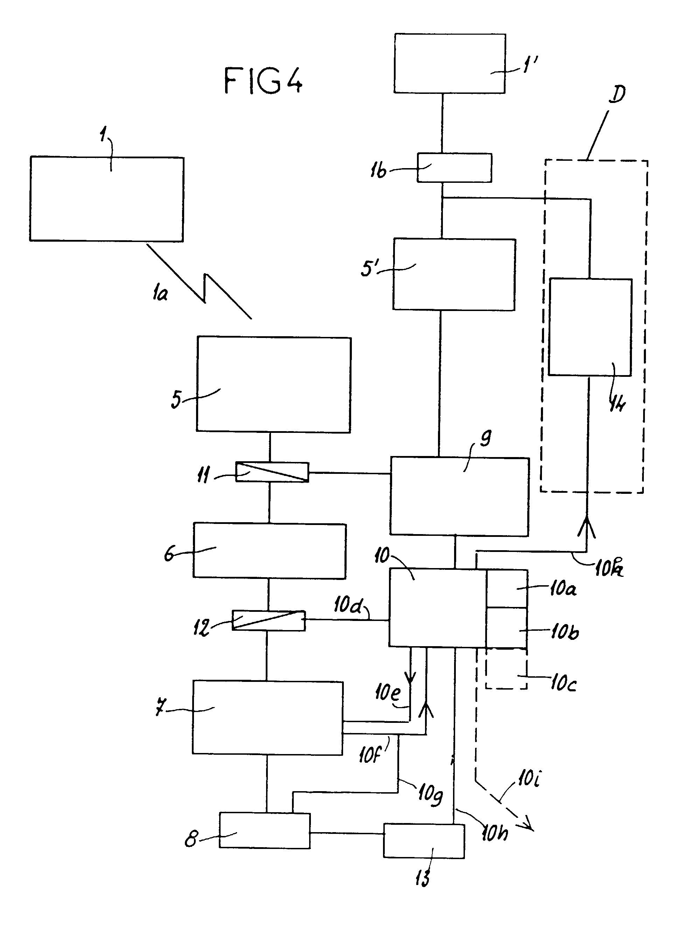

La figure 4 représente un système selon l'invention utilisant encore une liaison téléphonique de téléchargement de données, mais rendu interactif par l'adjonction d'un dispositif D de génération et d'émission de signaux audio, pouvant être envoyés sur la même ligne téléphonique 1b. Le dispositif D peut comprendre, plus particulièrement, des moyens de génération 14 de signaux DTMF, moyens qui sont commandés directement par le téléspectateur grâce à sa télécommande et à une liaison additionnelle 10k entre le processeur de traitement 10 et ces moyens 14. La composition des signaux DTMF peut se faire sur un clavier standard de téléphone, ou grâce à un module générateur DTMF intégré dans le téléviseur, le déclenchement de ces signaux étant, dans ce dernier cas, intégré au module de télécommande. Ce module DTMF peut envoyer un signal crypté identifiant le téléviseur, si l'on souhaite sécuriser le téléspectateur ou l'identifier de façon certaine. Quels que soient les moyens de génération 14 de signaux DTMF, ceux-ci permettent des réponses directes du téléspectateur, relatives au menu ou à d'autres questions affichées à l'écran du téléviseur, et autorisent ainsi toutes opérations interactives.

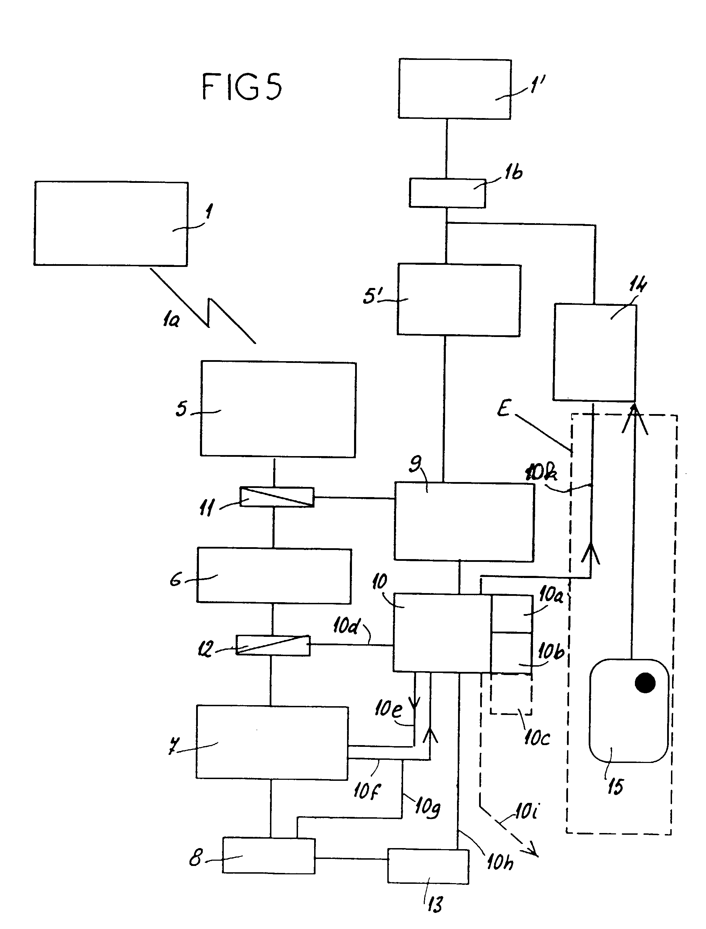

Enfin, la figure 5 montre un système auquel est ajouté un module optionnel E prévu pour une carte de modulation DTMF cryptée 15 ; dans ce cas, aucun dispositif de modulation DTMF n'est intégré au téléviseur ou à un boîtier externe, mais le téléviseur comporte un simple lecteur de carte DTMF. Introduite dans le lecteur, la carte 15 d'un encombrement voisin de celui d'une carte de crédit courante permet de délivrer un signal DTMF de n signes, cryptés, pour valider par exemple un paiement, un achat, une réponse dans un jeu, etc... notamment en provoquant le débit d'une valeur de départ (cas d'une carte prépayée).

Ainsi, l'interactivité peut être obtenue de façon simple et individualisée, les moyens émetteurs diffusant les mêmes informations vers tous les récepteurs, mais seul le récepteur qui s'identifie par un numéro particulier peut "récupérer", c'est-à-dire décoder et afficher, l'information intéressant précisément le téléspectateur possédant ce récepteur. De cette manière, par exemple, seul le gagnant d'un jeu est informé du fait qu'il a gagné et/ou du gain réalisé. Il s'agit, en quelque sorte, d'un "adressage" individuel.

Il va de soi que l'invention ne se limite pas aux seules modes de réalisation de ce système de gestion de programmes de télévision qui ont été décrits ci-dessus, à titre d'exemples ; elle en embrasse, au contraire, toutes les variantes d'exécution et d'application respectant le même principe. En particulier, l'on ne s'éloignerait pas du cadre de l'invention par le recours à tous moyens équivalents de ceux décrits, ou par l'adjonction de fonctions optionnelles supplémentaires, telles qu'affichage publicitaire à partir de données téléchargeables, ou gestion de jeux interactifs, ou encore en combinant les fonctions optionnelles d'une manière autre que les combinaisons particulières illustrées par les figures.

## Revendications

1. Système de gestion de programmes de télévision, comprenant en combinaison : des moyens émetteurs de données relatives aux programmes (1) suivant un format préétabli, du type "télétexte", des moyens de réception, décodage, stockage et affichage des données (2), également du type "télétexte", intégrés à un téléviseur ou associés à celui-ci, la transmission des données relatives aux programmes, entre les moyens émetteurs (1) et les moyens récepteurs (2), étant assurée par la voie de transmission des images (1a), une unité de traitement programmable (3) pour ces données et de commande d'actions relatives au téléviseur et/ou à un appareil associé, tel que magnétoscope, à partir de ces données, et des moyens de dialogue (4) permettant les sélections et actions, les données relatives aux programmes étant chargées dans une mémoire spécifique (9), dite mémoire de programmes, adjointe aux moyens de réception, décodage et affichage (2) de ces données, et l'unité de traitement programmable (3) étant principalement constituée d'un processeur de traitement spécifique (10), qui est en liaison avec la mémoire de programmes (9) et qui comprend lui-même une mémoire effaçable (10a) permettant le téléchargement de données variables liées à des programmes des chaînes de télévision, ainsi que l'enregistrement des choix effectués par le téléspectateur, cette unité de traitement (3) étant reliée à un dispositif existant d'affichage "télétexte" (A) dont elle utilise des fonctions (5 à 8), ou bien les fonctions du type "télétexte" étant incorporées au système, et ladite unité de traitement (3) étant en outre reliée aux moyens de commande existants du téléviseur pour le choix de la chaîne regardée, le système étant caractérisé en ce qu'il comprend un dispositif de commutation automatique des canaux de télévision (13), le processeur de traitement (10) comportant une liaison (10h) avec le dispositif de commutation automatique des canaux de télévision (13), par laquelle transitent les ordres de commutation de canal, le processeur de traitement (10) étant adapté de manière à permettre une commande automatique de changement de chaîne sur le téléviseur, en fonction de données mémorisées représentant des choix préalables du téléspectateur et des données reçues et traitées par le processeur de traitement (10).

2. Système de gestion de programmes de télévision selon la revendication 1, caractérisé en ce qu'un aiguillage électronique (11) est intercalé entre les moyens de réception et de décodage "télétexte" (5), la mémoire "télétexte" (6) et la mémoire de programmes (9), l'aiguillage (11) agissant sur la réception d'un code spécifique pour orienter des données sélectionnées vers la mémoire de programmes (9) et le processeur de traitement (10).

3. Système de gestion de programmes de télévision selon la revendication 1 ou 2, caractérisé en ce que l'ensemble constitué par le téléviseur, y compris sa télécommande, et par le système comprend des moyens de télécommande pour l'affichage, sur l'écran du téléviseur, d'informations telles que l'ensemble des programmes et/ou un choix de programmes effectué par le téléspectateur, cet affichage d'informations s'effectuant seul, ou en superposition à l'image de l'émission regardée.

4. Système de gestion de programmes de télévision selon la revendication 3, caractérisé en ce que le processeur de traitement (10) comporte des liaisons (10d,10e) de commande d'affichage de données liées aux programmes, aboutissant notamment à un organe de commutation (12) intercalé entre la mémoire "télétexte" (6) et les moyens de commande et d'affichage "télétexte" (7), et/ou aboutissant directement auxdits moyens de commande et d'affichage "télétexte" (7).

5. Système de gestion de programmes de télévision selon l'une quelconque des revendications 1 à 4, caractérisé en ce qu'il est prévu aussi pour la gestion d'un magnétoscope, le processeur de traitement (10) comprenant encore une mémoire de programmes (10c) pour le magnétoscope, ainsi qu'une liaison (10i) avec ce magnétoscope.

6. Système de gestion de programmes de télévision selon la revendication 1, avec utilisation d'une liaison téléphonique entre les moyens émetteurs et les moyens récepteurs de données, caractérisé en ce qu'il comprend des moyens (D,14) de génération de signaux audio et d'envoi de ces signaux sur la ligne téléphonique (1b), ces moyens (D,14) étant en relation (10k) avec le processeur de traitement (10).

7. Système de gestion de programmes de télévision selon la revendication 6, caractérisé en ce qu'il comprend encore des moyens (E) de génération ou transmission de signaux audio à partir d'une carte à puce, notamment d'une carte DTMF à puce (15).

## Patentansprüche

1. Verwaltungssystem für Fernsehprogramme, in Kombination umfassend: Ausstrahlungsmittel zum Ausgeben von Daten bezüglich der Programme (1) entsprechend einem vorbestimmten Format des Typs "Teletext", Mittel zum Empfang, zur Dekodierung, zur Speicherung und zur Anzeige von Daten (2) ebenfalls vom Typ "Teletext", die in einen Fernseher integriert oder ihm zugeordnet sind, wobei die Übertragung der Daten bezüglich der Programme zwischen den Ausstrahlungsmitteln (1) und den Empfangsmitteln (2) durch den Übertragungsweg von Bildern (1a) gewährleistet wird, eine Einheit zum programmierbaren Verarbeiten (3) für diese Daten und zum Steuern von Aktionen bezüglich zu dem Fernseher und/oder einem zugehörigen Apparat, wie ein Magnetoskop, durch diese Daten, und Mittel für den Austausch (4), die die Auswahl und Aktionen ermöglicht, wobei die Daten bezüglich der Programme in einen speziellen Speicher (9) geladen sind, der besagte Programmspeicher den Mitteln zum Empfang, zur Dekodierung, und zur Anzeige (2) dieser Daten zugeordnet ist, und die Einheit zur programmierbaren Verarbeitung (3) vor allem aus einem speziellem Verarbeitungsprozessor (10) gebildet ist, der in Verbindung mit dem Programmspeicher (9) ist und der selbst einen löschbaren Speicher (10a) umfaßt, der die Fernaufladung der variablen Daten ermöglicht, die an die Programme der Fernsehketten gekoppelt sind, so wie die Registrierung der durch den Fernsehzuschauer bewirkten Wahl, wobei diese Einheit zur Verarbeitung (3) mit einer vorhandenen Vorrichtung zur Anzeige "Teletext" (A) verbunden ist, von welcher sie Funktionen (5 bis 8) oder auch die Funktionen des Typs "Teletext" verwendet, die in dem System eingeschlossen sind, und die besagte Einheit zur Verarbeitung (3) andererseits mit vorhandenen Mitteln zum Steuern des Fernsehers für die Wahl der betrachteten Kette verbunden ist, wobei das System dadurch gekennzeichnet ist, daß es eine automatische Umschaltvorrichtung für die Fernsehkanäle (13) umfaßt, der Verarbeitungsprozessor (10) eine Verbindung (10h) mit der automatischen Umschaltvorrichtung für die Fersehkanäle (13) umfaßt, durch die sie die Umschaltbefehle des Kanals umwandelt, wobei der Verarbeitungsprozessor (10) derart angepaßt ist, um einen automatischen Befehl zum Wechseln der Kette auf dem Fernseher in Funktion von den gespeicherten Daten, die die vorläufige Wahl des Fernsehzuschauers darstellen, und von den empfangenen und durch den Verarbeitungsprozessor (10) verarbeiteten Daten zu ermöglichen.

2. Verwaltungssystem für Fernsehprogramme nach Anspruch 1, dadurch gekennzeichnet, daß eine elektronische Verzweigung (11) zwischen den Mitteln zum Empfang und zur Dekodierung "Teletext" (5), dem Speicher "Teletext" (6) und dem Programmspeicher (9) geschaltet ist, wobei die Verzweigung (11) auf den Empfang eines speziellen Codes für das Orientieren der ausgewählten Daten zu dem Programmspeicher (9) und dem Verarbeitungsprozessor (10) hin wirksam ist.

3. Verwaltungssystem für Fernsehprogramme nach Anspruch 1 oder 2, dadurch gekennzeichnet, daß der durch den Fernseher, der dort eine Fernsteuerung enthält, und durch das System gebildete Aufbau Mittel zur Fernsteuerung der Anzeige auf dem Bildschirm des Fernsehers von Informationen, so wie der Aufbau der Programme und/oder eine durch den Fernsehzuschauer bewirkte Wahl von Programmen, umfassen, wobei diese Anzeige von Informationen alleine oder in Überlagerung des Bildes der betrachteten Ausstrahlung bewirkt wird.

4. Verwaltungssystem für Fernsehprogramme nach Anspruch 3, dadurch gekennzeichnet, daß der Verarbeitungsprozessor (10) Steuerverbindungen (10d, 10e) für die Anzeige der Daten aufweist, die an die Programme gekoppelt sind, und insbesondere an eine Umschaltvorrichtung (12) angrenzen, die zwischen dem Speicher "Teletext" (6) und den Mitteln zum Steuern und zur Anzeige "Teletext" (7) geschaltet sind, und/oder sie direkt an die besagten Mittel zum Steuern und zur Anzeige "Teletext" (7) angrenzen.

5. Verwaltungssystem für Fernsehprogramme nach einem der Ansprüche 1 bis 4, dadurch gekennzeichnet, daß es auch für das Verwalten eines Magnetoskop vorgesehen ist, wobei der Verarbeitungsprozessor (10) noch einen Programmspeicher (10c) für das Magnetoskop so wie eine Verbindung (10i) mit dem Magnetoskop umfaßt.

6. Verwaltungssystem für Fernsehprogramme nach Anspruch 1 mit der Verwendung einer Telefonverbindung zwischen den Ausstrahlungsmitteln und den Mitteln zum Empfangen der Daten, dadurch gekennzeichnet, daß es Mittel (D, 14) zur Erzeugung von Tonsignalen und Sendesignalen dieser Signale an der Telefonleitung (1b) aufweist, wobei diese Mittel (D, 14) in Verbindung (10k) mit dem Verarbeitungsprozessor (10) sind.

7. Verwaltungssystem für Fernsehprogramme nach Anspruch 6, dadurch gekennzeichnet, daß es noch Mittel (E) zum Erzeugen oder zum Ausgeben von Tonsignalen von einer Chipkarte, insbesondere einer DTMF-Chipkarte (15) umfaßt.

## Claims

1. A system for managing television programs comprising in combination : means (1) for transmitting data relative to the programs according to a preestablished format of the teletext or similar type, means (2) for receiving, decoding, storing, and displaying the data also of the teletext or similar type integrated into a television receiver or associated therewith, the transmission of data relative to the programs between the transmitter means (1) and the receiver means (2) being ensured by the pathway of image transmission (1a), a programmable processing unit (3) for said data for controlling the operation of the television receiver and/or of an associated apparatus such as a videocassette recorder based on said data, and interface means (4) allowing selection ands operations, the data about the programs being loaded into a specific memory (9) called the program memory connected to the receiving, decoding, and display means (2) for said data, and the programmable processing unit (3) being formed mainly by a specific processor (10) which is connected with the program memory (9) and which itself has an erasable memory (10a) allowing the downloading of variable data related to the programs of the television channels as well as recording of the choices effected by the viewer, said processing unit (3) being connected to an existing display (A) of the teletext or similar type of which it uses the functions (5 to 8) or even the teletext or similar functions being incorporated in the system, and said processing unit (3) being in addition connected to existing control means of the television receiver for selecting the channel being watched, the system being characterized in that it comprises an automatic switching device (13) for the television channels, the processor (10) having a connection (10h), via which travel the commands for changing channels, with the automatic switching device (13) for the television channels, the processor (10) being designed for allowing automatic control of channel changes on the television receiver, according to stored data corresponding to the preselections of the viewer and to data which are received and handled by the processor (10).

2. The television-program management system according to claim 1, characterized in that an electronic selector (11) is interposed between the teletext receiving and decoding means (5), the teletext memory (6), and the program memory (9), the selector (11) acting when a specific code is received to send the selected data to the program memory (9) and to the processor (10).

3. The television-program management system according to claim 1 or 2, characterized in that the assembly formed by the television including its remote controller and by the system comprises means for remotely controlling the display on the television screen of the information such as all the programs and/or programs selected by the viewer, this display of information taking place alone or superposed on the image of the show being watched.

4. The television-program management system according to claim 3, characterized in that the processor (10) has connections (10d, 10e) that control the display of data about programs, said connections ending especially at a switching device (12) located between the teletext memory (6) and the teletext control and display means (7), and/or ending directly at said teletext control and display means (7).

5. The television-program management system according to one of claims 1 to 4, characterized in that it is set up for further controlling a videocassette recorder, the processor (10) also having a program memory (10c) for the recorder as well as a connection (10i) with said recorder.

6. The television-program management system according to claim 1 using a telephone connection between the data-transmitter means and the data-receiving means, characterized in that it includes means (D, 14) for generating audio signals and for sending said signals over the telephone line (1b), said means (D, 14) being connected (10k) with the processor (10).

7. The television-program management system according to claim 6, characterized in that it also includes means (E) for generating or transmitting audio signals based on a smart card, especially a DTMF smart card (15).
